# EUROPEAN PATENT SPECIFICATION

(11) **EP 2 584 010 B1**
(45) Date of publication and mention of the grant of the patent: **11.12.2013**
(21) Application number: 12188529.7
(22) Date of filing: 15.10.2012
(51) Int. Cl.: C09C 1/00

(54) **Bismuth-based pigment and method for its manufacture.**
Pigment auf Wismut-Basis und Herstellungsverfahren dafür
Pigment à base de bismuth et son procédé de fabrication

(30) Priority: 17.10.2011 EP 11185526
(43) Date of publication of application: 24.04.2013
(73) Proprietor: Cappelle Pigments N.V., 8930 Menen (BE)
(72) Inventor: Clabaux, Emmanuelle, 59800 Lille (FR); Verspaille, Greta, 9810 Nazareth (BE); D'Haeveloose, Jurgen, 8560 Wevelgem (BE)
(74) Representative: Pronovem

(56) References cited:
- EP-A1- 1 829 825
- JP-A- 2004 307 529
- US-A- 4 851 049
- US-A1- 2009 249 979

## Description

### Field of the Invention

The present invention relates to a bismuth-based pigment, more in particular to a double coated (colored) bismuth-based pigment.

The invention also relates to the process for manufacturing this pigment, and to substance compositions comprising this pigment.

Furthermore, the invention relates to the use of this pigment, in the coloring of high-molecular weight organic materials, such as paints, lacquers, inks, cosmetics, resins, or plastics, more particularly, in water-based paints.

### Background of the Invention

Inorganic colored pigments can be categorized according to their color and/or their chemical constitution, with oxides and oxide hydroxides (iron oxide pigments, chromium oxide pigments), including oxidic mixed-phase pigments, and bismuth, cadmium, cerium sulfide, chromate, ultramarine and iron blue pigments being distinguished.

During several years, lead chromate-based pigments and cadmium sulfide-based pigments have been widely used as a pigment in the yellow to orange color range (or spectrum) and the red spectrum, respectively.

Nowadays, a general move is under way to substitute these conventional pigments in the yellow to red color range by alternative pigments. Indeed, as conventional pigments are based on toxic lead, chromium, or cadmium metals, the use of these pigments is restricted, and in some applications fields even prohibited (e.g. in decorative paints or (surface) coatings). As such, efforts have been made during the last years to offer alternative pigments being free from toxicological concern.

In the search for such alternatives to those traditional pigments, the use of a number of non-toxic inorganic pigments has already been proposed.

In the yellow spectrum for example bismuth vanadate (BiVO₄)-based pigments are proposed to be used.

Indeed, for instance US 6,458,197 B1 describes a modified BiVO₄-based pigment being coated with a plurality of layers of inorganic compounds. This pigment has a bright yellow to orange color and exhibits excellent resistance to heat.

However, for the more reddish shade the offer is more limited. High performance organic pigments or iron oxide-based pigments can for example be used, but the former offers a poor level of opacity, and the latter gives only a dark orange to dark red shade.

For the more reddish yellow range of shades, doped (inorganic) pigments with improved properties in terms of durability and/or shade and clearness can be used. Indeed, DE19529837 for example describes a bismuth vanadate-based pigment doped with iron. US 4,455,174 is related to yellow pigments containing bismuth vanadate and bismuth molybdate. US 6,464,772 discloses a bismuth-based pigment exhibiting a yellow to orange color composed of a component based on bismuth vanadate and a component based in bismuth oxyhalides.

However, as bismuth vanadate-based pigments only cover the greenish yellow part of the spectrum, and the reddish yellow part of the spectrum being covered by some modified BiVO₄-based pigments, there is still a need for alternative pigments in the orange and reddish orange part of the spectrum.

Pigments in this spectrum do exist, based for example on nickel titanates, which however do not possess properties comparable to those of the above mentioned pigments regarding color saturation and tinting strength.

In US 4,448,608, for example, pigments based on the rutile, tin, and zinc family of compounds are described, offering yellow to orange and reddish orange colors. Moreover, their properties have recently been improved by modification of the composition to provide a durable pigment with satisfying color strength and purity, as disclosed in US 2010/0050903. Unfortunately, despite of the high level of resistance to chemicals, these pigments cannot entirely satisfy the coloristic requirements, especially the purity of shades.

Alternative pigments based on bismuth oxyhalide compounds (or bismuth oxide halides) are disclosed in US 4,252,570 having colors from yellow to orange to red-orange. Unfortunately, said bismuth oxyhalide pigments are inferior in terms of color purity. Furthermore, in addition to the issue of color purity, the resistance to weathering is not satisfactory.

EP 1 805 267 B1 describes the use of doping agents in bismuth oxide halides pigments to reach the required level of durability with promising coloristic properties. Unfortunately, the obtained pigments are particularly unstable in alkaline media (having a pH ranging from about 8 to about 13), which limit the scope of their use in water-based paints or (surface) coatings.

In order to improve their application properties, more particularly their resistance to chemicals, pigments known in the art (such as bismuth oxyhalide pigments or bismuth vanadate-based pigments) generally contain dopants such as alkaline earth metal, zinc, aluminum, or phosphate (as e.g. described in US 4,252,570 (DE2727865), DE2940185, DE4200925, EP441101, and WO92/11205). Furthermore, they can subsequently be provided with protective sheaths formed from silicates, phosphates, or metal oxides (as e.g. described in US 4,252,570 (DE2727864), DE3135281, DE4037878). However, these pigments remain ineffective to tackle the chemical resistance matter in alkaline media, although offering meanwhile an acceptable purity of the shade.

In US patent 4,851,049, a process for preparing thermostable bismuth vanadate/molybdate pigments is described. Said process comprises the steps of precipitating onto a pigment (obtained by calcination) of the formula BiVO₄.nBi₂MoO₆ (where n is 0.2-2.5), in aqueous suspension at 70°-100°C within the pH range from 4 to 9.5 a first SiO₂-containing layer, maintaining the suspension at 70°-100°C for not less than 1 hour, producing a thick coating on the precoated pigment, and depositing wax on the SiO₂-containing layer. It is described that the products are showing, compared with the starting pigment, an appreciably improved thermal stability in plastics.

US 2009/0249979 A1 discloses weatherstable pearlescent pigments having a secondary coating comprising alpha-silanes, and a method for the production thereof.

EP 1 829 825 A1 relates to a highly translucent bright yellow pigment of the formula BiₓV₍₂₋ₓ₎O₍₅₋ₓ₎ wherein x is a number of 0.1 to 2, characterized by a particle size d_{50,BET} of 10 to 100 nm. It is described that the bismuth vanadate pigments can be prepared by a spray flame pyrolysis process.

While the industry is thus clearly faced with predominant deficiencies in terms of pigment choice, it is clear that finding alternative pigments for replacing lead-based and cadmium-based pigments with an acceptable level of technical quality has not yet been fully realized, and thus remains a challenging problem.

Extensive proposals for such alternative pigments are still needed to overcome the issues of the pigments known in the art with respect to their coloristic requirements or properties (e.g. purity of shade (color purity, color saturation, color intensity, color or tinting strength), opacity (hiding power, clearness (bright, transparent, pure color)), resistance (fastness, stability, durability) to e.g. chemicals, weathering, light, and heat, especially in the orange spectrum.

Despite the progress in the art, there is a need for inorganic, non-toxic, orange pigments simultaneously combining various characteristics desired for an application of a pigment.

More particularly, there is a need for inorganic, non-toxic, orange pigments with pure shade and reasonable (or excellent, or even improved) resistance to chemicals in alkaline media (and with a resistance to weathering at least equal or even sometimes superior) compared to those of the pigments known in the art.

Other advantages of the invention will be immediately apparent to those skilled in the art from the following description.

### Aims of the Invention

The present invention aims to provide an improved inorganic, bismuth-based pigment that does not present the drawbacks of the state of the art, especially for the reddish yellow to reddish orange spectrum until the red spectrum.

In particular, the present invention aims to provide a pigment in said spectrum having pure shade, the chemical resistance of which with respect to alkaline media (having a pH ranging from (about) 8 to (about) 13) is excellent or even improved (and having a resistance to weathering at least equal or even sometimes superior) when compared to bismuth based pigments known in the art.

Furthermore, the present invention aims to provide a method for producing such a pigment, and to substance compositions comprising the pigment of the invention.

The present invention also aims to provide the use of the pigment of the invention in the coloring of high-molecular weight organic materials, such as paints, lacquers, inks, cosmetics, resins, or plastics, more particularly in water-based paints.

### Summary of the Invention

The present invention provides an improved inorganic, bismuth-based pigment for the reddish yellow to reddish orange spectrum until the red spectrum, which does not present the drawbacks of prior art pigments.

In particular, the present invention provides a bismuth-based pigment in this spectrum having pure shade, the chemical resistance of which with respect to alkaline media (having a pH ranging from (about) 8 to (about) 13) is excellent or even improved (and having a resistance to weathering at least equal or sometimes even superior) when compared to pigments known in the art.

More particularly, the present invention provides a bismuth-based pigment having pure shade when compared to pigments known in the art.

The pigment of the present invention also provides the advantage over existing pigments in prior art that it is more resistant to light (photocatalytic effect or degradation of color influenced by light is minimalized).

Moreover, the pigment of the present invention has the advantage to be totally safe (being a non-toxic pigment), when compared to pigments known in the art.

More particularly, the pigment of the present invention has the advantage that it does not comprise chlorine (Cl), nor zinc (Zn), when compared to pigments known in the art.

Furthermore, the present invention provides a method for producing the pigment of the invention, and compositions comprising this pigment.

The present invention provides the use of said pigments in the coloring of high-molecular weight organic materials, such as paints, lacquers, inks, cosmetics, resins, or plastics, more particularly in water-based paints.

According to one aspect of the present invention, it is provided a bismuth-based pigment comprising a first coating containing silicon dioxide and one or more functionalized silane(s), and a second coating containing one or more functionalized silane(s).

Preferably, the pigment of the invention, comprises by weight, based on the pigment before being coated, from (about) 5% to (about) 25% of silicon dioxide, preferably, from (about) 5% to (about) 10% of silicon dioxide; and from (about) 0.5% to (about) 10% of one or more silane(s), preferably, from (about) 0.5% to (about) 5% of one or more silane(s).

Preferably, this (one or more) silane(s) is (are) of the general formula R-Si-(OR')₃, wherein
R is an alkyl group, preferably an alkyl group having from 1 to 22 carbon atom(s), an aryl group, or a combination thereof; or
R is an alkyl group, preferably an alkyl group having from 1 to 16 carbon atom(s), said alkyl group being substituted with at least one electron donating group, preferably an alcohol group or an amino group; and
R' is an alkyl group, preferably an alkyl group having from 1 to 3 carbon atom(s), or an aryl group.

More preferably, this silane comprises (or consists of, or is selected from the group consisting of) amino-3-propyltriethoxysilane, N-(2-aminoethyl-3-aminopropyl)-trimethoxysilane, phenyltriethoxysilane, hexadecyltrimethoxysilane, propyltrimethoxysilane, methyltriethoxysilane, N-benzyl-N-aminoethyl-3-aminopropyltrimethoxysilane, N-vinylbenzyl-N'-aminoethyl-3-aminopropylpolysiloxane, N-(n-butyl)-3-aminopropyltrimethoxysilane, or any combination of two or more thereof.

Preferably, the pigment of the invention is of the general formula BiOIₐBr_{b}, wherein a is a number from (about) 0 to (about) 1, preferably from (about) 0.35 to (about) 0.90, more preferably from (about) 0.50 to (about) 0.70; and b is a number from (about) 0 to (about) 1, preferably from (about) 0.10 to (about) 0.65, more preferably from (about) 0.30 to (about) 0.50.

According to another aspect, the present invention is also directed to a method for manufacturing a coated bismuth-based pigment according to the invention, said method comprising the steps of:
- providing an aqueous dispersion of a bismuth-based pigment;
- adding an amount of silicon dioxide and a first amount of functionalized silane(s) to said aqueous dispersion of said bismuth-based pigment;
- stirring said dispersion in a temperature range comprised between (about) 75°C and (about) 95°C, preferably between (about) 90°C and (about) 95°C, in a pH range comprised between (about) 1 and (about) 3.5, preferably at a pH of (about) 2.5, for a time comprised between (about) 2 hours to (about) 4 hours, preferably for a time comprised between (about) 1 hour to (about) 4 hours;
- adding a second amount of functionalized silane(s) to said aqueous dispersion of said bismuth-based pigment;
- stirring said dispersion, while maintaining the temperature in a range from (about) 75°C to (about) 95°C, preferably from (about) 90°C to (about) 95°C, maintaining the pH in a range from (about) 1 to (about) 3.5, preferably at a pH of (about) 2.5, for a time comprised between about 5 minutes to (about) 40 minutes, preferably for (about) 15 minutes;
- filtering, washing, and drying the coated pigment.

Preferably, the method of the invention comprises between the step of stirring the dispersion and the step of filtering, washing, and drying the coated pigment, the step of neutralizing said dispersion to a pH in the range from (about) 5 to (about) 8, preferably at a pH of (about) 7.

Preferably, in the method of the invention, the amount of silicon dioxide added to said aqueous dispersion of said pigment ranges from (about) 5% to (about) 25%, more preferably, from (about) 5% to (about) 10%, by weight, based on the pigment before being coated, and the first amount and the second amount of silane(s) added to said aqueous dispersion of said pigment ranges from (about) 0.5% to (about) 10%, more preferably, from (about) 0.5% to (about) 5%, by weight, based on the pigment before being coated.

Preferably, in the method of the invention, the added silane(s) is (are) of the general formula R-Si-(OR')₃, wherein R is an alkyl group, preferably an alkyl group having from 1 to 22 carbon atom(s), an aryl group, or a combination thereof; or
R is an alkyl group, preferably an alkyl group having from 1 to 16 carbon atom(s), said alkyl group being substituted with at least one electron donating group, preferably an alcohol group or an amino group; and
R' is an alkyl group, preferably an alkyl group having from 1 to 3 carbon atom(s), or an aryl group.

More preferably, said silane comprises (or consists of, or is selected from the group consisting of) amino-3-propyltriethoxysilane, N-(2-aminoethyl-3-aminopropyl)-trimethoxysilane, phenyltriethoxysilane, hexadecyltrimethoxysilane, propyltrimethoxysilane, methyltriethoxysilane, N-benzyl-N-aminoethyl-3-aminopropyltrimethoxysilane, N-vinylbenzyl-N'-aminoethyl-3-aminopropylpolysiloxane, N-(n-butyl)-3-aminopropyltrimethoxysilane, or any combination of two or more thereof.

Preferably, in the method of the invention, the (bismuth-based) pigment is of the general formula BiOIₐBr_{b}, wherein a is a number from (about) 0 to (about) 1, preferably from (about) 0.35 to (about) 0.90, more preferably from (about) 0.50 to (about) 0.70; and b is a number from 0 to (about) 1, preferably from (about) 0.10 to (about) 0.65, more preferably from (about) 0.30 to (about) 0.50.

According to yet another aspect, the present invention is related to a substance composition comprising the (bismuth-based) pigment (obtainable by a method) according to the invention, a high molecular weight organic material, and at least one inorganic or organic pigment, the total amount of the pigment being comprised between (about) 0.01% to (about) 80% by weight, preferably between (about) 0.1% to (about) 30% by weight, based on the high molecular weight organic material.

More particularly, the high molecular weight organic material is a paint (or (surface) coating), a (automotive) lacquer, a (printing) ink, a cosmetic, a resin, or a plastic.

Preferably, the substance composition is a paint, a lacquer, an ink, a cosmetic, a resin, or a plastic.

According to still another aspect, the present invention is directed to the use of the pigment according to the invention as a colorant in paints, lacquers, inks, cosmetics, resins, or plastics.

More preferably, the pigment of the present invention is used in water-based paints.

### Description of the Invention

In the context of the present invention, it has been surprisingly discovered that (colored) bismuth-based pigments (or pigments comprising bismuth) are obtained having improved properties (as compared to pigments known in the art), when said pigments comprise a first coating containing (or comprising) silicon dioxide (SiO₂) (or silica) and one or more functionalized silane(s), and a second coating containing (or comprising) one or more functionalized silane(s).

In the context of the present invention, it has been surprisingly found that these properties are not improved when pigments comprise only one single coating of silicon dioxide (and/or one or more functionalized silane(s)).

According to the invention, it is therefore provided a (double coated, colored) bismuth-based pigment (or a bismuth-comprising pigment, or a pigment comprising bismuth) comprising a first coating (or this pigment being coated with a first layer) containing (or comprising) silicon dioxide (SiO₂) (or silica) and one or more (organo)functionalized (or substituted) silane(s), and a second coating (or this pigment being coated with a second layer onto this first layer) containing (or comprising) one or more (organo)functionalized (or substituted) silane(s).

The first coating of the pigment of the invention comprises silicon dioxide (SiO₂) (or silica) and one or more (two, three, ...) functionalized silane(s).

Preferably, this first coating comprises silicon dioxide (SiO₂) (or silica) and one or two functionalized silane(s), more preferably, one functionalized silane.

The second coating of the pigment of the invention comprises one or more (two, three, ...) functionalized silane(s).

Preferably, this second coating comprises one or two functionalized silane(s).

In the context of the present invention, it has been surprisingly found that the bismuth-based pigment of the invention has a pure shade for the reddish yellow to reddish orange spectrum until the red spectrum, and a chemical resistance of which with respect to alkaline media (having a pH ranging from (about) 8 to (about) 13) is excellent or even improved (and having a resistance to weathering at least equal or sometimes even superior) when compared to bismuth based pigments known in the art.

Without wishing to be bound by theory, it is believed that the (first amount of) silane(s) present in this first coating results in this first coating (of silicon dioxide) being more dense and therefore more effective with respect to the protection of this pigment against chemicals (when compared to bismuth based pigments known in the art). In other words, it is believed that the presence of the (first amount of) silane(s) in this first coating thus results in a pigment having a more hydrophobic character (when compared to the uncoated pigment), limiting the penetration of basic agents (or chemicals) into this pigment and therefore limiting the chemical degradation of the pigment. The second coating is then formed (onto this first coating) using (or supplying) a (second amount of) silane(s), as a surface treatment of this pigment (this pigment already comprising this first coating of silicon dioxide and one or more functionalized silane(s)).

In the context of the present invention, it has been surprisingly discovered that the presence of this silane(s) (in this first and in this second coating) modifies the surface of the pigment, and as a consequence, also its behaviour in its application media.

In the context of the present invention, the resistance of a pigment to chemicals in alkaline media (or chemical resistance in alkaline media, or alkaline resistance, or alkalinity resistance) refers to a measure of how well the pigment resists chemicals in alkaline media.

In other words, an improved (or better) chemical resistance in alkaline media of the pigment of the present invention refers to the pigment being more stable (or less degraded) in this alkaline media (and this pigment having the same weather fastness) when compared to uncoated pigments and bismuth based pigments known in the art.

In the context of the present invention, the resistance to weathering (or weather fastness) of a pigment (or of a color or dye, provided by the use of this pigment) refers to the ability of this pigment (or this color of dye) to remain permanent (and not run or fade) by being exposed to (all kinds of) weather conditions.

Preferably, the pigment according to the invention comprises by weight, based on the pigment before being coated, from (about) 5% to (about) 25% of silicon dioxide (SiO₂) (or silica), preferably, from (about) 5% to (about) 10% of silicon dioxide; and from (about) 0.5% to (about) 10% of one or more silane(s), preferably, from (about) 0.5% to (about) 5% of one or more silane(s).

More particularly, the total amount of (this first and second) coating of the pigment according to the invention comprises by weight, based on the pigment before being coated, from (about) 5% to (about) 25% of silicon dioxide (SiO₂) (or silica), preferably, from (about) 5% to (about) 10% of silicon dioxide; and from (about) 0.5% to (about) 10% of one or more silane(s), preferably, from (about) 0.5% to (about) 5% of one or more silane(s).

Preferably, the silicon dioxide (SiO₂) (or silica) is provided by ((the decomposition of) a solution of) a salt comprising silicate.

More preferably, the salt is sodium silicate (Na₂SiO₃) or potassium silicate (K₂SiO₃), even more preferably, sodium silicate (Na₂SiO₃).

Preferably, the (one or more) silane(s) is (are) of the general formula
R-Si-(OR')₃, wherein
R is an alkyl group, preferably an alkyl group having from 1 to 22 carbon atom(s), an aryl group, or a combination thereof (being then said alkyl group substituted with at least one aryl group); or
R is an alkyl group, preferably an alkyl group having from 1 to 16 carbon atom(s), this alkyl group being substituted with at least one electron donating group, preferably an alcohol group or an amino group; and
R' is an alkyl group, preferably an alkyl group having from 1 to 3 carbon atom(s), or an aryl group.

More preferably, in the silane formula, the radical R being an alkyl group has from 1 to 16 carbon atom(s), even more preferably 1 to 3 carbon atom(s).

More preferably, the radical R being an alkyl group substituted with at least one electron donating group has from 1 to 6 carbon atom(s), even more preferably from 1 to 3 carbon atom(s).

More preferably, this at least one electron donating group is an amino group (or this alkyl group is substituted with at least one amino group).

More preferably, the radical R is not an aminogroup or an hydroxyl group directly bonded to the silicon (Si).

More preferably, the radical R' is an alkyl group such as an ethyl group.

Even more preferably, the silane comprises (or consists of, or is selected from the group consisting of) amino-3-propyltriethoxysilane (or 3-aminopropyltriethoxysilane, H₂N-(CH₂)₃-Si(OC₂H₅)₃), N-(2-aminoethyl-3-aminopropyl)-trimethoxysilane (NH₂-(CH₂)₂-NH-(CH₂)₃-Si(OC₂H₅)₃), phenyltriethoxysilane (C₆H₅-Si (OC₂H₅)₃), hexadecyltrimethoxysilane (C₁₆H₃₃Si (OCH₃)₃, or H₃C(CH₂)₁₅Si(OCH₃)₃), propyltrimethoxysilane (C₆H₁₆O₃Si, or C₃H₇-Si-(OCH₃)₃), methyltriethoxysilane (C₇H₁₈O₃Si, or CH₃Si-(OEt)₃), N-benzyl-N-aminoethyl-3-aminopropyltrimethoxysilane (C₆H₅-CH₂-N- (-CH₂-CH₂-NH₂)-CH₂-CH₂-CH₂-Si(OCH₃)₃), N-vinylbenzyl-N'-aminoethyl-3-aminopropylpolysiloxane (CH₂=CH-C₆H₄-CH₂-NH-CH₂-CH₂-NH-CH₂-CH₂-CH₂-Si(OMe)₃), N-(n-butyl)-3-aminopropyltrimethoxysilane (C₁₀H₂₅NO₃Si, or CH₃-CH₂-CH₂-CH₂-NH-CH₂-CH₂-CH₂-Si(OCH₃)₃), or any combination of two or more thereof.

Most preferably, this silane comprises (or consists of, or is selected from the group consisting of) amino-3-propyltriethoxysilane (or 3-aminopropyltriethoxysilane, H₂N-(CH₂)₃-Si(OC₂H₅)₃), N- (2-aminoethyl-3-aminopropyl)-trimethoxysilane (NH₂-(CH₂)₂-NH-(CH₂)₃-Si(OC₂H₅)₃ ), phenyltriethoxysilane (C₆H₅-Si (OC₂H₅)₃), or any combination of two or more thereof.

Finding a suitable (combination of) silane(s) for use in the coating of the pigment according to the invention is well within the practice of those skilled in the art.

Preferably, the pigment according to the invention is of the general formula BiOIₐBr_{b} (oxyhalide of bismuth), wherein a is a number from (about) 0 to (about) 1, preferably from (about) 0.35 to (about) 0.90, more preferably from (about) 0.50 to (about) 0.70; and b is a number from 0 to (about) 1, preferably from (about) 0.10 to (about) 0.65, more preferably from (about) 0.30 to (about) 0.50.

More particularly, in said general formula BiOIₐBr_{b}, the sum of the numbers a and b is higher than 0 (a+b > 0) (or the numbers a and b are not simultaneously 0).

The first and/or second coating of the pigment according to the invention can further comprise dopants.

Another aspect of the present invention is directed to a method for manufacturing (or a process for preparing) a (double) coated bismuth-based pigment (or a bismuth-comprising pigment, or a pigment comprising bismuth), this method comprising the (sequential) steps of:
- providing an aqueous dispersion of a (uncoated) bismuth-based pigment;
- adding an amount of silicon dioxide (SiO₂) (or silica) and a first amount of (organo)functionalized (or substituted) silane(s) to this aqueous dispersion of the bismuth-based pigment (or treating the aqueous dispersion of the bismuth-based pigment with an amount of silicon dioxide and a first amount of (organo)functionalized (or substituted) silane(s));
- stirring the dispersion in a temperature range comprised between (about) 75°C and (about) 95°C, preferably between (about) 90°C and (about) 95°C, in a pH range comprised between (about) 1 and (about) 3.5, preferably at a pH of (about) 2.5, for a time comprised between (about) 2 hours to (about) 4 hours, preferably for a time comprised between (about) 1 hour to (about) 4 hours (this first step of stirring being performed for depositing or for forming a first coating onto the pigment);
- adding a second amount of (organo)functionalized (or substituted) silane(s) to the aqueous dispersion of the bismuth-based pigment (or treating the aqueous dispersion of the bismuth-based pigment with a second amount of (organo)functionalized (or substituted) silane(s));
- stirring the dispersion, while maintaining the temperature in a range from (about) 75°C to (about) 95°C, preferably from (about) 90°C to (about) 95°C, maintaining the pH in a range from (about) 1 to (about) 3.5, preferably at a pH of (about) 2.5, for a time comprised between (about) 5 minutes to (about) 40 minutes, preferably for (about) 15 minutes (this second step of stirring being performed for depositing or for forming a second coating onto (the first coating of) the pigment);
- (isolating by) filtering, washing, and (possibly) drying the (obtained or resultant) coated pigment.

Performing the first step of stirring said dispersion in the method of the present invention results in depositing (or forming) a first coating onto the pigment.

Performing the second step of stirring said dispersion in the method of the present invention results in depositing (or forming) a second coating onto (the first coating of) the pigment.

In the method of the present invention, said (double) coated bismuth-based pigment (or bismuth-comprising pigment, or pigment comprising bismuth) is obtained (or isolated) after performing the step of filtering, washing, and (possibly) drying.

More particularly, said (double) coated bismuth-based pigment is obtained in powder form.

Preferably, in the method of the invention, the pH of the dispersion during the first step of stirring the dispersion is adjusted by adding (or using) acids, such as hydrogen chloride (HCl), sulphuric acid (H₂SO₄), acetic acid (CH₃COOH), or nitric acid (HNO₃).

Preferably, in the method of the invention, the pH of the dispersion during the second step of stirring the dispersion is adjusted by adding (or using) acids, such as hydrogen chloride (HCl), sulphuric acid (H₂SO₄), acetic acid (CH₃COOH), or nitric acid (HNO₃).

More preferably, the pH of the dispersion during the first and/or the second step of stirring the dispersion is adjusted by adding (or using) sulphuric acid (H₂SO₄).

Preferably, the method of the invention comprises between the (second) step of stirring the dispersion and the step of filtering, washing, and (possibly) drying the coated pigment, the step of neutralizing the dispersion to a pH in the range from (about) 5 to (about) 8, preferably at a pH of (about) 7.

More particularly, the method of the invention comprises between the step for depositing (or for forming) the second coating onto (the first coating of) the pigment and the step of filtering, washing, and (possibly) drying the coated pigment, the step of neutralizing the dispersion to a pH in the range from (about) 5 to (about) 8, preferably at a pH of (about) 7.

More preferably, the pH of the dispersion is neutralized by adding (a solution of) sodium carbonate (Na₂CO₃), sodium hydroxide (NaOH), or potassium hydroxide (KOH).

Even more preferably, the pH of the dispersion is neutralized by adding (a solution of) sodium carbonate (Na₂CO₃).

Preferably, in the method of the invention, the (total) amount of silicon dioxide added to the aqueous dispersion of the (bismuth-based) pigment ranges from (about) 5% to (about) 25%, more preferably, from (about) 5% to (about) 10%, by weight, based on the pigment before being coated, and the first amount and the second amount of silane(s) added to the aqueous dispersion of the (bismuth-based) pigment ranges from (about) 0.5% to (about) 10%, more preferably, from (about) 0.5% to (about) 5%, by weight, based on the pigment before being coated.

More particularly, the first amount of silane(s) added to the aqueous dispersion of the (bismuth-based) pigment is the (total) amount of silane(s) added for forming the first coating onto the pigment.

In a method of the invention, the first amount of silane(s) added to the aqueous dispersion of the (bismuth-based) pigment can range from (about) 0.5% to (about) 10%, more preferably, from (about) 0.5% to (about) 5%, by weight, based on the pigment before being coated.

More particularly, the second amount of silane(s) added to the aqueous dispersion of the (bismuth-based) pigment is the (total) amount of silane(s) added for forming the second coating onto (the first coating of) the pigment.

In a method of the invention, the second amount of silane(s) added to the aqueous dispersion of said (bismuth-based) pigment can range from (about) 0.5% to (about) 10%, more preferably, from (about) 0.5% to (about) 5%, by weight, based on the pigment before being coated.

In the method of the invention, the first amount of silane(s) and the second amount of silane(s) are calculated in percentages % by weight based on the pigment before being coated (i.e. the pigment as introduced in the reactor).

By performing the method of the invention, not all the amount of silicon dioxide and not all the amount of silane(s) (i.e. first and second amount of silane(s)) added during the manufacturing of the coated bismuth-based pigment are deposited on said obtained pigment, as the adhesion of the silicon oxide and silane(s) onto the pigment is not complete.

In the method of the present invention, the total amount of coating (i.e. the total amount of first and second coating) is measured by weighing the obtained coated pigment, and calculating the difference between said measured mass of said obtained coated pigment and the mass of the uncoated pigment as introduced into the reactor.

Preferably, in the method of the invention, the concentration of said pigment in said aqueous dispersion ranges by volume from (about) 1% to (about) 10%, preferably from (about) 2% to (about) 3.5%.

Preferably, in the method of the invention, the added silicon dioxide (SiO₂) (or silica) is provided by (adding) (a solution of) a salt comprising silicate.

More preferably, this salt is sodium silicate (Na₂SiO₃) or potassium silicate (K₂SiO₃), even more preferably, sodium silicate (Na₂SiO₃).

Preferably, in the method of the invention, the added (first amount and second amount of) silane(s) is (are) of the general formula R-Si-(OR')₃, wherein
R is an alkyl group, preferably an alkyl group having from 1 to 22 carbon atom(s), an aryl group, or a combination thereof (being then said alkyl group substituted with at least one aryl group); or
R is an alkyl group, preferably an alkyl group having from 1 to 16 carbon atom(s), this alkyl group being substituted with at least one electron donating group, preferably an alcohol group or an amino group; and
R' is an alkyl group, preferably an alkyl group having from 1 to 3 carbon atom(s), or an aryl group.

More preferably, in the silane formula, the radical R being an alkyl group has from 1 to 16 carbon atom(s), even more preferably from 1 and 3 carbon atom(s).

More preferably, the radical R being an alkyl group substituted with at least one electron donating group has from 1 to 6 carbon atom(s), even more preferably from 1 to 3 carbon atom(s).

More preferably, this at least one electron donating group is an amino group (or said alkyl group is substituted with at least one amino group).

More preferably, the radical R is not an aminogroup or an hydroxyl group directly bonded to said silicon (Si).

More preferably, said R' being an alkyl group is an ethyl group.

Even more preferably, The silane comprises (or consists of, or is selected from the group consisting of) amino-3-propyltriethoxysilane (or 3-aminopropyltriethoxysilane, H₂N-(CH₂)₃-Si(OC₂H₅)₃), N-(2-aminoethyl-3-aminopropyl)-trimethoxysilane (NH₂-(CH₂)₂-NH-(CH₂)₃-Si(OC₂H₅)₃), phenyltriethoxysilane (C₆H₅-Si (OC₂H₅)₃), hexadecyltrimethoxysilane (C₁₆H₃₃Si (OCH₃)₃,or H₃C(CH₂)₁₅Si(OCH₃)₃), propyltrimethoxysilane (C₆H₁₆O₃Si, or C₃H₇-Si-(OCH₃)₃), methyltriethoxysilane (C₇H₁₈O₃Si, or CH₃Si-(OEt)₃), N-benzyl-N-aminoethyl-3-aminopropyltrimethoxysilane (C₆H₅-CH₂-N-(-CH₂-CH₂-NH₂)-CH₂-CH₂-CH₂-Si(OCH₃)₃), N-vinylbenzyl-N'-aminoethyl-3-aminopropylpolysiloxane (CH₂=CH-C₆H₄-CH₂-NH-CH₂-CH₂-NH-CH₂-CH₂-CH₂-Si(OMe)₃), N-(n-butyl)-3-aminopropyltrimethoxysilane (C₁₀H₂₅NO₃Si, or CH₃-CH₂-CH₂-CH₂-NH-CH₂-CH₂-CH₂-Si(OCH₃)₃), or any combination of two or more thereof.

Most preferably, said silane comprises (or consists of, or is selected from the group consisting of) amino-3-propyltriethoxysilane (or 3-aminopropyltriethoxysilane, H₂N-(CH₂)₃-Si(OC₂H₅)₃), N- (2-aminoethyl-3-aminopropyl)-trimethoxysilane (NH₂-(CH₂)₂-NH-(CH₂)₃-Si(OC₂H₅)₃), phenyltriethoxysilane (C₆H₅-Si (OC₂H₅)₃), or any combination of two or more thereof.

Finding a suitable (combination of) silane(s) for use in a method according to the invention is well within the practice of those skilled in the art.

In a method according to the invention, two or more silanes can be combined.

More particularly, two silanes can be combined, or three silanes can be combined.

Preferably, in a method according to the invention, the (bismuth-based) pigment is of the general formula BiOIₐBr_{b} (oxyhalide of bismuth), wherein a is a number from (about) 0 to (about) 1, preferably from (about) 0.35 to (about) 0.90, more preferably from (about) 0.50 to (about) 0.70; and b is a number from 0 to (about) 1, preferably from (about) 0.10 to (about) 0.65, more preferably from (about) 0.30 to (about) 0.50.

More particularly, in said general formula BiOIₐBr_{b}, the sum of the numbers a and b is higher than 0 (a+b > 0) (or the numbers a and b are not simultaneously 0).

Preferably, in a method according to the invention, the first and/or second coating of the pigment can further be doped.

According to still another aspect, the present invention is related to a (double) coated bismuth-based pigment obtainable by a method according to the present invention.

According to yet another aspect, the present invention is related to a substance composition comprising the ((double) coated) bismuth-based pigment (obtainable by a method) according to the invention.

Preferably, the substance composition comprises the pigment of the invention, a high molecular weight organic material, and at least one (other) inorganic or organic pigment, the total amount of the pigment being comprised between (about) 0.01% to (about) 80% by weight, preferably between (about) 0.1% to (about) 30% by weight, based on the high molecular weight organic material.

More particularly, the high molecular weight organic material is a paint (or (surface) coating), a (automotive) lacquer, a (printing) ink, a cosmetic, a resin, or a plastic.

Preferably, the substance composition is a high-molecular weight organic material.

More preferably, the substance composition is a paint (or (surface) coating), a (automotive) lacquer, a (printing) ink, a cosmetic, a resin, or a plastic.

The pigment (obtainable by a method) of the present invention may find particular use for various applications.

Preferably, the pigment of the invention can be used as a colorant in a high-molecular weight organic material (for coloring said material).

More preferably, the pigment can be used in paints (or (surface) coatings, such as water-based paints (or coatings), or coil coatings), (automotive) lacquers, (printing) inks, cosmetics, resins, or plastics.

More particularly, the pigment can be employed in e.g. automotive, industrial, and (indoor and outdoor) decorative paints (or (surface) coatings).

Even more preferably, the pigment is used in alkaline media (having a pH ranging from (about) 8 to (about) 13) (such as water-based paints (or (surface) coatings)), this pigment having an improved chemical resistance in this alkaline media.

More particularly, the pigment of the invention is used in water-based paints (or (surface) coatings).

The present invention will be described in the enclosed examples, presented as non limiting preferred embodiments of the invention.

### EXAMPLES

For the examples described below, the commercially available (bismuth-based) pigment LYSOPAC ORANGE 6820B (from CAPPELLE Pigments n.v.) has been used.

It is to be understood that the method of the present invention can also be realized using (or can also be applied to any) other bismuth-based pigment.

### Example 1

70g of LYSOPAC ORANGE 6820B pigment is added to (dispersed in) 1 liter of water with 6.9g of a 25% (by volume) silicate solution. The volume is then adjusted to 3500 ml by addition of water and the temperature is raised to 90°C (1°C/minute). 9.6g of a 25% (by volume) sodium silicate (Na₂SiO₃) solution is diluted in 35g of water, and then added to the reactor over a time ranging from 30 minutes to 1 hour. 1.4g amino-3-propyltriethoxysilane is then added, after which the pH is adjusted (acidified) to 2.5 over 2.5 hours. 0.7g amino-3-propyltriethoxysilane is then added to the reactor. The reactor is stirred for 15 minutes, and then the pH is adjusted (neutralized) to 7.2 with a 10% (by volume) sodium carbonate (Na₂CO₃) solution. 70.1g reddish orange pigment is obtained after filtration, washing, and drying.

### Example 2

70g of LYSOPAC ORANGE 6820B pigment is added to (dispersed in) 1 liter of water with 6.9g of a 25% (by volume) silicate solution. The volume is then adjusted to 3500 ml by addition of water and the temperature is raised to 90°C (1°C/minute). 19.2g of a 25% (by volume) sodium silicate (Na₂SiO₃) solution is diluted in 70g of water, and then added to the reactor over a time ranging from 30 minutes to 1 hour. 1.4g N-(2-aminoethyl-3-aminopropyl)-trimethoxysilane is then added, after which the pH is adjusted (acidified) to 2.5 over 2.5 hours. 0.7g N-(2-aminoethyl-3-aminopropyl)-trimethoxysilane is then added to the reactor. The reactor is stirred for 15 minutes, and then the pH is adjusted (neutralized) to 7.2 with a 10% (by volume) sodium carbonate (Na₂CO₃) solution. 73.1g reddish orange pigment is obtained after filtration, washing, and drying.

### Example 3

70g of LYSOPAC ORANGE 6820B pigment is added to (dispersed in) 1 liter of water with 6.9g of a 25% (by volume) silicate solution. The volume is then adjusted to 3500 ml by addition of water and the temperature is raised to 95°C (1°C/minute). The suspension (dispersion) is maintained at 95°C for 2 hours. 19.2g of a 25% (by volume) sodium silicate (Na₂SiO₃) solution is diluted in 70g of water, and then added to the reactor over a time ranging from 30 minutes to 1 hour. 0.35g phenyltriethoxysilane is then added, after which the pH is adjusted (acidified) to 2.5 over 2.5 hours. 0.7g N-(2-aminoethyl-3-aminopropyl)-trimethoxysilane is then added to the reactor. The reactor is stirred for 15 minutes, and then the pH is adjusted (neutralized) to 7.2 with a 10% (by volume) sodium carbonate (Na₂CO₃) solution. 72.3g reddish orange pigment is obtained after filtration, washing, and drying.

### Example 4

70g of LYSOPAC ORANGE 6820B pigment is added to (dispersed in) 1 liter of water with 6.9g of a 25% (by volume) silicate solution. The volume is then adjusted to 3500 ml by addition of water and the temperature is raised to 95°C (1°C/minute). The suspension (dispersion) is maintained at 95°C for 2 hours. 19.2g of a 25% (by volume) sodium silicate (Na₂SiO₃) solution is diluted in 70g of water, and then added to the reactor over a time ranging from 30 minutes to 1 hour. 1.4g N-(2-aminoethyl-3-aminopropyl)-trimethoxysilane is then added, after which the pH is adjusted (acidified) to 2.5 over 2.5 hours. 0.35g N-(2-aminoethyl-3-aminopropyl)-trimethoxysilane and 0.35g phenyltriethoxysilane are then added to the reactor. The reactor is stirred for 15 minutes, and then the pH is adjusted (neutralized) to 7.2 with a 10% (by volume) sodium carbonate (Na₂CO₃) solution. 72.3g reddish orange pigment is obtained after filtration, washing, and drying.

### Example 5

70g of LYSOPAC ORANGE 6820B pigment is added to (dispersed in) 1 liter of water with 6.9g of a 25% (by volume) silicate solution. The volume is then adjusted to 3500 ml by addition of water and the temperature is raised to 90°C (1°C/minute). 38.4g of a 25% (by volume) sodium silicate (Na₂SiO₃) solution is diluted in 140g of water, and then added to the reactor over a time ranging from 30 minutes to 1 hour. 1.4g amino-3-propyltriethoxysilane is then added, after which the pH is adjusted (acidified) to 2.5 over 2.5 hours. 0.7g amino-3-propyltriethoxysilane is then added to the reactor. The reactor is stirred for 15 minutes, and then the pH is adjusted (neutralized) to 7.2 with a 10% (by volume) sodium carbonate (Na₂CO₃) solution. 73.4g reddish orange pigment is obtained after filtration, washing, and drying.

### Example 6

70g of LYSOPAC ORANGE 6820B pigment is added to (dispersed in) 1 liter of water with 6.9g of a 25% (by volume) silicate solution. The volume is then adjusted to 3500 ml by addition of water and the temperature is raised to 95°C (1°C/minute). The suspension (dispersion) is maintained at 95°C for 2 hours. 19.2g of a 25% (by volume) sodium silicate (Na₂SiO₃) solution is diluted in 70g of water, and then added to the reactor over a time ranging from 30 minutes to 1 hour. 0.35g N-benzyl-N-aminoethyl-3-aminopropyltrimethoxysilane is then added, after which the pH is adjusted (acidified) to 2.5 over 2.5 hours. 0.35g N-(2-aminoethyl-3-aminopropyl)-trimethoxysilane and 0.35g N-benzyl-N-aminoethyl-3-aminopropyltrimethoxysilane are then added to the reactor. The reactor is stirred for 15 minutes, and then the pH is adjusted (neutralized) to 7.2 with a 10% (by volume) sodium carbonate (Na₂CO₃) solution. 72.3g reddish orange pigment is obtained after filtration, washing, and drying.

### Example 7

70g of LYSOPAC ORANGE 6820B pigment is added to (dispersed in) 1 liter of water with 6.9g of a 25% (by volume) silicate solution. The volume is then adjusted to 3500 ml by addition of water and the temperature is raised to 95°C (1°C/minute). The suspension (dispersion) is maintained at 95°C for 2 hours. 19.2g of a 25% (by volume) sodium silicate (Na₂SiO₃) solution is diluted in 70g of water, and then added to the reactor over a time ranging from 30 minutes to 1 hour. 0.35g N-vinylbenzyl-N'-aminoethyl-3-aminopropylpolysiloxane is then added, after which the pH is adjusted (acidified) to 2.5 over 2.5 hours. 0.7g N-(2-aminoethyl-3-aminopropyl)-trimethoxysilane is then added to the reactor. The reactor is stirred for 15 minutes, and then the pH is adjusted (neutralized) to 7.2 with a 10% (by volume) sodium carbonate (Na₂CO₃) solution. 72.3g reddish orange pigment is obtained after filtration, washing, and drying.

### Example 8

70g of LYSOPAC ORANGE 6820B pigment is added to (dispersed in) 1 liter of water with 6.9g of a 25% (by volume) silicate solution. The volume is then adjusted to 3500 ml by addition of water and the temperature is raised to 95°C (1°C/minute). The suspension (dispersion) is maintained at 95°C for 2 hours. 19.2g of a 25% (by volume) sodium silicate (Na₂SiO₃) solution is diluted in 70g of water, and then added to the reactor over a time ranging from 30 minutes to 1 hour. 1.4g amino-3-propyltriethoxysilane is then added, after which the pH is adjusted (acidified) to 2.5 over 2.5 hours. 0.7g hexadecyltrimethoxysilane is then added to the reactor. The reactor is stirred for 15 minutes, and then the pH is adjusted (neutralized) to 7.2 with a 10% (by volume) sodium carbonate (Na₂CO₃) solution. 72.3g reddish orange pigment is obtained after filtration, washing, and drying.

### Example 9

70g of LYSOPAC ORANGE 6820B pigment is added to (dispersed in) 1 liter of water with 6.9g of a 25% (by volume) silicate solution. The volume is then adjusted to 3500 ml by addition of water and the temperature is raised to 95°C (1°C/minute). The suspension (dispersion) is maintained at 95°C for 2 hours. 19.2g of a 25% (by volume) sodium silicate (Na₂SiO₃) solution is diluted in 70g of water, and then added to the reactor over a time ranging from 30 minutes to 1 hour. 0.7g propyltrimethoxysilane and 0.35g amino-3-propyltriethoxysilane are then added, after which the pH is adjusted (acidified) to 2.5 over 2.5 hours. 0.7g amino-3-propyltriethoxysilane is then added to the reactor. The reactor is stirred for 15 minutes, and then the pH is adjusted (neutralized) to 7.2 with a 10% (by volume) sodium carbonate (Na₂CO₃) solution. 72.3g reddish orange pigment is obtained after filtration, washing, and drying.

### Example 10

70g of LYSOPAC ORANGE 6820B pigment is added to (dispersed in) 1 liter of water with 6.9g of a 25% (by volume) silicate solution. The volume is then adjusted to 3500 ml by addition of water and the temperature is raised to 95°C (1°C/minute). The suspension (dispersion) is maintained at 95°C for 2 hours. 19.2g of a 25% (by volume) sodium silicate (Na₂SiO₃) solution is diluted in 70g of water, and then added to the reactor over a time ranging from 30 minutes to 1 hour. 0.7g amino-3-propyltriethoxysilane and 0.7g methyltriethoxysilane are then added, after which the pH is adjusted (acidified) to 2.5 over 2.5 hours. 0.7g amino-3-propyltriethoxysilane is then added to the reactor. The reactor is stirred for 15 minutes, and then the pH is adjusted (neutralized) to 7.2 with a 10% (by volume) sodium carbonate (Na₂CO₃) solution. 72.3g reddish orange pigment is obtained after filtration, washing, and drying.

### Example 11: comparative example

70g of LYSOPAC ORANGE 6820B pigment is added to (dispersed in) 1 liter of water with 6.9g of a 25% (by volume) silicate solution. The volume is then adjusted to 3500 ml by addition of water and the temperature is raised to 90°C (1°C/minute). 19.2g of a 25% (by volume) sodium silicate (Na₂SiO₃) solution is diluted in 70g of water, and then added to the reactor over a time ranging from 30 minutes to 1 hour. The pH is adjusted (acidified) to 2.5 over 2.5 hours. The reactor is stirred for 15 minutes, and then the pH is adjusted (neutralized) to 7.2 with a 10% (by volume) sodium carbonate (Na₂CO₃) solution. 75.45g reddish orange pigment is obtained after filtration, washing, and drying.

**TABLE 1**

| example | Silane 1 | Silane 2 | % charge |
|---|---|---|---|
| 1 | amino-3-propyltriethoxy silane 2% | amino-3-propyltriethoxysi lane 1% | 0.13% |
| 2 | N-(2-aminoethyl-3-aminopropyl)-trimethoxysilan e 2% | N-(2-aminoethyl-3-aminopropyl)-trimethoxysilane 1% | 4.43% |
| 3 | phenyltriethoxy silane 0.5% | N-(2-aminoethyl-3-aminopropyl)-trimethoxysilane 1% | 3.29% |
| 4 | N-(2-aminoethyl-3-aminopropyl)-trimethoxysilan e 2% | N-(2-aminoethyl-3-aminopropyl)-trimethoxysilane 0.5% | 3.29% |
| | | phenyltriethoxysi lane 0.5% | |
| 5 | amino-3-propyltriethoxy silane 2% | amino-3-propyltriethoxysi lane 1% | 13.7% |
| 6 | N-benzyl-N-aminoethyl-3-aminopropyltrim ethoxysilane 0.5% | N-(2-aminoethyl-3-aminopropyl)-trimethoxysilane 0.5% | 5.3% |
| | | N-benzyl-N-aminoethyl-3-aminopropyltrimet hoxysilane 0.5% | |
| 7 | N-vinylbenzyl-N'-aminoethyl-3-aminopropylpoly siloxane 0.5% | N-(2-aminoethyl-3-aminopropyl)-trimethoxysilane 1% | 6.6% |
| 8 | amino-3-propyltriethoxy silane 2% | Hexadecyltrimetho xysilane 1% | 5.3% |
| 9 | amino-3-propyltriethoxy silane 0.5% | amino-3-propyltriethoxysi lane 1% | 6.6% |
| | propyltrimethox ysilane 1% | | |
| 10 | amino-3-propyltriethoxy silane 1% | amino-3-propyltriethoxysi lane 1% | 7.1% |
| | methyltriethoxy silane 1% | | |
| 11 | - | - | 7.79% |

The amounts of silane(s) (Silane 1 and Silane 2) used for preparing the pigments according to example 1 to 11 and the total amount of coating (% charge) (comprising silicon dioxide and silane(s)) are summarized in **Table 1.**

The percentage (%) of Silane 1 and Silane 2 in this **Table 1** is the percentage (%) of silane(s) added during the synthesis of the coated pigment (i.e. Silane 1 and Silane 2 being the amount of silane(s) added for forming the first coating and the second coating, respectively).

The mentioned percentage of silane(s) in table 1 (Silane 1 and Silane 2) is calculated in % by weight based on the pigment before the coating (i.e. the pigment as introduced in the reactor).

Not all the amount of silicon dioxide and silane(s) added during the synthesis of the pigment are deposited on the final pigment, as the adhesion onto the pigment is not complete.

The percentage (%) of charge in this **Table 1** is the total amount of (this first and second) coating (comprising silicon dioxide and silane(s)) in weight based on the weight of the coated pigment.

This total amount of coating is measured by weighing the final coated pigment, and calculating the difference between the measured mass of the final coated pigment and the mass of the uncoated pigment as being introduced into the reactor.

### Example 12: water based paint preparation

### Mill base: 60% pigment

- 15g dispersing agent Dysperbyk 190 with 40% active matter
- 25g Reverse-Osmose water (RO-water)
- 60g of the said pigment e.g. LYSOPAC ORANGE 6820B pigment, coated (prepared) according to the procedure of the examples described above
- 100g of glass beads of diameter 2 mm

The ingredients are weighted in a glass bottle and the samples are milled for 60 minutes, and left 15 minutes at ambient temperature before further processing.

### White paint: 20% pigment

The white emulsion paint of 20% pigment loading is prepared according the formulation below by using a laboratory dissolver Dispermat from Getzmann in a 2000 mL metal bottle. The fineness of the final paint (measured (determined) by a Hegman gauge) should be below 20 µm.
- 187.5g RO-water
- 0.5g Calgon^{®} N Neu
- 5g pigment verteiler A
- 5g mergal S97
- 3g agitan 218

The ingredients are mixed in a lab dissolver, adding then the following ingredients:
- 200.0g TiO₂ CL 2310 (Kronos)
- 75.0g Calcilit 1G
- 25g Finn Talc
- 150.0g Calcilit 6G

The ingredients are dispersed for 10 minutes at 10m/s and the following ingredients are added under slow stirring:
- 14.0g Texanol
- 5.0g rheoloate 278
- 330g acronal 290D (50%)

Finally the ingredients are mixed during 10 minutes in the dissolver.

### Reduced shade 1/9 TiO₂ and drawdowns

A reduced shade is prepared by weighing, in a plastic beaker of 125 ml, 0.71g of the mill base and 19.29g of the white paint (coating) described above, and homogenizing it with the Hautschild dental centrifuge type AM501 for 1 minute.

The homogenized reduced shade is manually applied on LENATA black/white contrast paper by means of barcoater N°8 (wet filmthickness 8 mm). The drawdowns are dried for 24 hours at ambient temperature.

The resulting coatings (reduced shade) can coloristically be evaluated with a spectrophotometer Minolta CM3600d using a measuring angle of 10° and standard illuminant D65 to determine the CIELAB colorimetric characterisations (CIELAB color values) ΔE-ΔL-ΔC-ΔH before and after correction.

**Table 2** summarizes the coloristic assessment of the pigments (reduced shade 1/9 TiO₂) - reference: pigment LYSOPAC ORANGE 6820B (reduced shade 1/9 TiO₂).

**TABLE 2**

| example | | ΔE | ΔL | ΔC | ΔH | CS (%) |
|---|---|---|---|---|---|---|
| 1 | Before corr. | 2.69 | 1.28 | -2.33 | -0.43 | 82.7 |
| | After corr. | 0.61 | 0.04 | -0.15 | -0.59 | |
| 2 | Before corr. | 2.00 | 0.74 | -1.80 | -0.44 | 87.3 |
| | After corr. | 0.62 | -0.16 | -0.21 | -0.56 | |
| 3 | Before corr. | 0.44 | 0.34 | -0.22 | 0.18 | 96.8 |
| | After corr. | 0.26 | 0.16 | 0.17 | 0.15 | |
| 4 | Before corr. | 0.66 | 0.40 | -0.51 | 0.10 | 95.0 |
| | After corr. | 0.13 | 0.07 | 0.10 | 0.06 | |
| 5 | Before corr. | 4.54 | 1.45 | -4.25 | -0.63 | 73.8 |
| | After corr. | 1.31 | -0.61 | -0.63 | -0.98 | |
| 6 | Before corr. | 3.64 | 0.6 | -3.3 | -1.42 | 80.2 |
| | After corr. | 2.03 | -0.89 | -0.73 | -1.68 | |
| 7 | Before corr. | 3.76 | 0.62 | -3.35 | -1.59 | 79.6 |
| | After corr. | 2.18 | -0.93 | -0.70 | -1.85 | |
| 8 | Before corr. | 5.41 | 0.89 | -4.75 | -2.45 | 71.7 |
| | After corr. | 3.31 | -1.39 | -0.96 | -2.85 | |
| 9 | Before corr. | 4.11 | 0.84 | -3.75 | -1.45 | 77.1 |
| | After corr. | 2.1 | -0.92 | -0.74 | -1.74 | |
| 10 | Before corr. | 4.23 | 0.87 | -3.83 | -1.55 | 76.5 |
| | After corr. | 2.21 | -0.94 | -0.72 | -1.86 | |
| 11 (comparative example) | Before corr. | 10.22 | 3.19 | -9.70 | -0.45 | 45.15 |
| | After corr. | 3.67 | -1.79 | -3.06 | -0.94 | |
| Sicopal^{®} Orange L2430 (BASF) | Before corr. | 4.76 | 1.41 | -2.45 | 3.83 | 77.3 |
| | After corr. | 3.75 | -0.28 | 0.45 | 3.71 | |
| solaplex^{®} | Before corr. | 4.05 | 1.12 | -1.31 | 3.67 | 90.8 |
| | After corr. | 3.66 | 0.49 | -0.19 | *3.63* | |

### Example 13: alkalinity resistance

The reduced shade prepared in the example 12 is applied on aluminium panels manually using the barcoater N°8 (wet film 100 µm). After 30 minutes drying in the oven (at 50°C) and additional 24 hours drying at ambient temperature, the half of the painted panels are immersed for 24 hours in a solution of 25% K₂CO₃. The exposed surface will be rinsed with tap water and kept at ambient temperature until complete drying (i.e. for 2 to 3 hours).

The color deviation between immersed and non-immersed surface of the same panel can visually and colorimetrically (see example 12) be evaluated to judge the alkaline stability of the pigment.

The difference in color strength is due to the degradation of the pigment by the basic solution. The highest is the color strength compared to the non-immersed part of the panel, the best is the alkaline resistance.

The results are compared only with samples tested in the same conditions (same day, same solution, same drying).

**Table 3** summarizes the coloring strength (CS) of the pigments after being exposed for 24 hours to a solution of K₂CO₃ - reference: non-exposed part.

**TABLE 3**

| example | CS (%) |
|---|---|
| LYSOPAC ORANGE 6820B | 10.8 |
| 1 | 52.5 |
| 2 | 76.3 |
| 3 | 59.6 |
| 4 | 69.5 |
| 5 | 78.8 |
| 6 | 80.8 |
| 7 | 76.7 |
| 8 | 97.7 |
| 9 | 78.6 |
| 10 | 77.5 |
| 11 | 10.1 |
| BiVO₄ 2GTA - BASF | 63.01 |

It can be seen from the results shown in **Table 2 and Table 3** that the bismuth-based pigments of the present invention have a pure shade, and a chemical resistance of which with respect to alkaline media is good (or better, improved) when compared to bismuth-based pigments known in the art.

Furthermore, the bismuth-based pigments of the present invention have a resistance to weathering at least equal (or even sometimes superior) when compared to pigments known in the art.

This is particularly true for bismuth-based pigments of the invention used in coil coating applications.

## Claims

1. A bismuth-based pigment comprising a first coating containing silicon dioxide and one or more functionalized silane(s), and a second coating containing one or more functionalized silane(s).

2. The pigment according to claim 1, comprising by weight, based on the pigment before being coated, from 5% to 25% of silicon dioxide, preferably, from 5% to 10% of silicon dioxide; and from 0.5% to 10% of one or more silane(s), preferably, from 0.5% to 5% of one or more silane(s).

3. The pigment according to claim 1 or 2, wherein the silane(s) is (are) of the general formula
R-Si-(OR')₃,
wherein
R is an alkyl group, preferably an alkyl group having from 1 to 22 carbon atom(s), an aryl group, or a combination thereof; or
R is an alkyl group, preferably an alkyl group having from 1 to 16 carbon atom(s), said alkyl group being substituted with at least one electron donating group, preferably an alcohol group or an amino group; and
R' is an alkyl group, preferably an alkyl group having from 1 to 3 carbon atom(s), or an aryl group.

4. The pigment according to claim 3, wherein said silane comprises amino-3-propyltriethoxysilane, N-(2-aminoethyl-3-aminopropyl)-trimethoxysilane, phenyltriethoxysilane, hexadecyltrimethoxysilane, propyltrimethoxysilane, methyltriethoxysilane, N-benzyl-N-aminoethyl-3-aminopropyltrimethoxysilane, N-vinylbenzyl-N'-aminoethyl-3-aminopropylpolysiloxane, N-(n-butyl)-3-aminopropyltrimethoxysilane, or any combination of two or more thereof.

5. The pigment according to any of the preceding claims, wherein said pigment is of the general formula
BiOIₐBr_{b},
wherein
a is a number from 0 to 1, preferably from 0.35 to 0.90, more preferably from 0.50 to 0.70; and
b is a number from 0 to 1, preferably from 0.10 to 0.65, more preferably from 0.30 to 0.50.

6. A method for manufacturing a coated bismuth-based pigment according to claim 1, said method comprising the steps of:
- providing an aqueous dispersion of a bismuth-based pigment;
- adding an amount of silicon dioxide and a first amount of functionalized silane(s) to said aqueous dispersion of said bismuth-based pigment;
- stirring said dispersion in a temperature range comprised between 75°C and 95°C, preferably between 90°C and 95°C, in a pH range comprised between 1 and 3.5, preferably at a pH of 2.5, for a time comprised between 2 hours to 4 hours, preferably for a time comprised between 1 hour to 4 hours;
- adding a second amount of functionalized silane(s) to said aqueous dispersion of said bismuth-based pigment;
- stirring said dispersion, while maintaining the temperature in a range from 75°C to 95°C, preferably from 90°C to 95°C, maintaining the pH in a range from 1 to 3.5, preferably at a pH of 2.5, for a time comprised between 5 minutes to 40 minutes, preferably for 15 minutes;
- filtering, washing, and drying the coated pigment.

7. The method according to claim 6, said method comprising between the step of stirring the dispersion and the step of filtering, washing, and drying the coated pigment, the step of neutralizing said dispersion to a pH in the range from 5 to 8, preferably at a pH of 7.

8. The method according to claim 6 or 7, wherein by weight, based on the pigment before being coated, the amount of silicon dioxide added to said aqueous dispersion of said pigment ranges from 5% to 25%, more preferably, from 5% to 10%, and wherein the first amount and the second amount of silane(s) added to said aqueous dispersion of said pigment ranges from 0.5% to 10%, more preferably, from 0.5% to 5%.

9. The method according to any of claims 6 to 8, wherein said added silane(s) is (are) of the general formula
R-Si-(OR')₃,
wherein
R is an alkyl group, preferably an alkyl group having from 1 to 22 carbon atom(s), an aryl group, or a combination thereof; or
R is an alkyl group, preferably an alkyl group having from 1 to 16 carbon atom(s), said alkyl group being substituted with at least one electron donating group, preferably an alcohol group or an amino group; and
R' is an alkyl group, preferably an alkyl group having from 1 to 3 carbon atom(s), or an aryl group.

10. The method according to claim 9, wherein said silane comprises amino-3-propyltriethoxysilane, N-(2-aminoethyl-3-aminopropyl)-trimethoxysilane, phenyltriethoxysilane, hexadecyltrimethoxysilane, propyltrimethoxysilane, methyltriethoxysilane, N-benzyl-N-aminoethyl-3-aminopropyltrimethoxysilane, N-vinylbenzyl-N'-aminoethyl-3-aminopropylpolysiloxane, N-(n-butyl)-3-aminopropyltrimethoxysilane, or any combination of two or more thereof.

11. The method according to any of claims 6 to 10, wherein said pigment is of the general formula
BiOIₐBr_{b},
wherein
a is a number from 0 to 1, preferably from 0.35 to 0.90, more preferably from 0.50 to 0.70; and
b is a number from 0 to 1, preferably from 0.10 to 0.65, more preferably from 0.30 to 0.50.

12. A substance composition comprising the pigment according to any of claims 1 to 5, a high molecular weight organic material, and at least one inorganic or organic pigment, the total amount of the pigment being comprised between 0.01% to 80% by weight, preferably between 0.1% to 30% by weight, based on the high molecular weight organic material.

13. The substance composition according to claim 12, wherein said composition is a paint, a lacquer, an ink, a cosmetic, a resin, or a plastic.

14. Use of the pigment according to any of claims 1 to 5 as a colorant in paints, lacquers, inks, cosmetics, resins, or plastics.

15. Use of the pigment according to claim 14 in water-based paints.

## Patentansprüche

1. Ein Pigment auf Wismutbasis umfassend eine erste Beschichtung, die Siliciumdioxid und ein oder mehrere funktionalisierte Silan(e) enthält, und eine zweite Beschichtung, die ein oder mehrere funktionalisierte Silan(e) enthält.

2. Das Pigment nach Anspruch 1, umfassend nach Gewicht, dem Pigment vor dem Beschichten bezogen, von 5 % bis 25 % Siliciumdioxid, bevorzugt, von 5 % bis 10 % Siliciumdioxid; und von 0,5 % bis 10 % eines oder mehrerer Silan(e), bevorzugt, von 0,5 % bis 5 % eines oder mehrerer Silan(e).

3. Das Pigment nach Anspruch 1 oder 2, wobei das/die Silan(e) die allgemeine Formel
R-Si-(OR')₃ aufweist/aufweisen,
wobei
R eine Alkylgruppe, bevorzugt eine Alkylgruppe die 1 bis 22 Kohlenstoffatom(e) aufweist, eine Arylgruppe, oder eine Kombinationen davon ist; oder
R eine Alkylgruppe, bevorzugt eine Alkylgruppe die 1 bis 16 Kohlenstoffatom(e) aufweist, wobei die besagte Alkylgruppe mit mindestens einer elektronenspendenden Gruppe, bevorzugt einer Alkoholgruppe oder einer Aminogruppe, substituiert ist; und
R' eine Alkylgruppe, bevorzugt eine Alkylgruppe die 1 bis 3 Kohlenstoffatom(e) aufweist, oder eine Arylgruppe ist.

4. Das Pigment nach Anspruch 3, wobei das besagte Silan Amino-3-propyltriethoxysilan, N-(2-Aminoethyl-3-aminopropyl)-trimethoxysilan, Phenyltriethoxysilan, Hexadecyltrimethoxysilan, Propyltrimethoxysilan, Methyltriethoxysilan, N-Benzyl-N-aminoethyl-3-aminopropyltrimethoxysilan, N-Vinylbenzyl-N'-aminoethyl-3-aminopropylpolysiloxan, N-(n-Butyl)-3-aminopropyltrimethoxysilan, oder irgendeine Kombination von zwei oder mehrere davon umfasst.

5. Das Pigment nach einem der vorhergehenden Ansprüche, wobei das besagte Pigment die allgemeine Formel
BiOIₐBr_{b}
aufweist, wobei
a eine Zahl von 0 bis 1, bevorzugt von 0,35 bis 0,90, noch bevorzugter von 0,50 bis 0,70 ist; und
b eine Zahl von 0 bis 1, bevorzugt von 0,10 bis 0,65, noch bevorzugter von 0,30 bis 0,50 ist.

6. Ein Verfahren zur Herstellung eines beschichteten Pigments auf Wismutbasis nach Anspruch 1, wobei das besagte Verfahren die Schritte umfasst des:
- Bereitstellens einer wässrigen Dispersion eines Pigments auf Wismutbasis;
- Hinzusetzens einer Menge Siliciumdioxid und einer ersten Menge von funktionalisiertem Silan/funktionalisierten Silanen zu der besagten wässrigen Dispersion des besagten Pigments auf Wismutbasis;
- Rührens der besagten Dispersion in einem Temperaturbereich, der zwischen 75 °C und 95 °C, bevorzugt zwischen 90 °C und 95 °C liegt, in einem pH-Wertbereich der zwischen 1 und 3,5 liegt, bevorzugt bei einem pH-Wert von 2,5, für eine Zeitspanne die zwischen 2 Stunden bis 4 Stunden liegt, bevorzugt für eine Zeitspanne die zwischen 1 Stunde bis 4 Stunden liegt;
- Hinzusetzens einer zweiten Menge von funktionalisiertem Silan/funktionalisierten Silanen zu der besagten wässrigen Dispersion des besagten Pigments auf Wismutbasis;
- Rührens der besagten Dispersion, während die Temperatur in einem Bereich von 75 °C bis 95 °C, bevorzugt 90 °C bis 95 °C gehalten wird, Halten des pH-Werts in einem Bereich von 1 bis 3,5, bevorzugt bei einem pH-Wert von 2,5 für eine Zeitspanne die zwischen 5 Minuten bis 40 Minuten liegt, bevorzugt 15 Minuten beträgt;
- Filtrierens, Waschens, und Trocknens des beschichteten Pigments.

7. Das Verfahren nach Anspruch 6, wobei das besagte Verfahren zwischen dem Schritt des Rührens der Dispersion und dem Schritt des Filtrierens, Waschens, und Trocknens des beschichteten Pigments, den Schritt des Neutralisierens der Dispersion auf einen pH-Wert im Bereich von 5 bis 8, bevorzugt einen pH-Wert von 7 umfasst.

8. Das Verfahren nach Anspruch 6 oder 7, wobei nach Gewicht, dem Pigment vor dem Beschichten bezogen, die Menge an Siliciumdioxid, das der besagten wässrigen Dispersion des besagten Pigments hinzugesetzt wird, im Bereich von 5 % bis 25 %, bevorzugter, von 5 % bis 10 % liegt, und wobei die erste Menge und die zweite Menge des Silans/der Silane, die der besagten wässrigen Dispersion des besagten Pigments zugesetzt wird, im Bereich von 0,5 % bis 10 %, bevorzugter, von 0,5 % bis 5 % liegt.

9. Das Verfahren nach irgendeinem der Ansprüche 6 bis 8, wobei das/die besagte(n) hinzusetzte(n) Silan(e) die allgemeine Formel
R-Si-(OR')₃
aufweist/aufweisen, wobei
R eine Alkylgruppe, bevorzugt eine Alkylgruppe die 1 bis 22 Kohlenstoffatom(e) aufweist, eine Arylgruppe, oder eine Kombination davon ist; oder
R eine Alkylgruppe, bevorzugt eine Alkylgruppe die 1 bis 16 Kohlenstoffatom(e) aufweist, wobei die besagte Alkylgruppe mit mindestens einer elektronenspendenden Gruppe, bevorzugt einer Alkoholgruppe oder einer Amingruppe substituiert ist; und
R' eine Alkylgruppe, bevorzugt eine Alkylgruppe die 1 bis 3 Kohlenstoffatom(e) aufweist, oder eine Arylgruppe ist.

10. Das Verfahren nach Anspruch 9, wobei das besagte Silan Amino-3-propyltriethoxysilan, N-(2-Aminoethyl-3-aminopropyl)-trimethoxysilan, Phenyltriethoxysilan, Hexadecyltrimethoxysilan, Propyltrimethoxysilan, Methyltriethoxysilan, N-Benzyl-N-aminoethyl-3-aminopropyltrimethoxysilan, N-Vinylbenzyl-N'-aminoethyl-3-aminopropylpolysiloxan, N-(n-Butyl)-3-aminopropyltrimethoxysilan, oder irgendeine Kombination von zwei oder mehrere davon umfasst.

11. Das Verfahren nach irgendeinem der Ansprüche 6 bis 10, wobei das besage Pigment die allgemeine Formel
BiOIₐBr_{b}
aufweist, wobei
a eine Zahl von 0 bis 1, bevorzugt von 0,35 bis 0,90, bevorzugter von 0,50 bis 0,70 ist; und
b eine Zahl von 0 bis 1, bevorzugt von 0,10 bis 0,65, bevorzugter von 0,30 bis 0,50 ist.

12. Eine Substanzzusammensetzung umfassend das Pigment nach irgendeinem der Ansprüche 1 bis 5, ein organisches Material mit hohem Molekulargewicht, und mindestens ein anorganisches oder organisches Pigment, wobei die Gesamtmenge des Pigments zwischen 0,01 bis 80 Gew.-%, bevorzugt zwischen 0,1 bis 30 Gew.-%, auf das organische Material mit hohem Molekulargewicht bezogen, liegt.

13. Die Substanzzusammensetzung nach Anspruch 12, wobei die Zusammensetzung ein Anstrichmittel, ein Lack, eine Tinte, ein Kosmetikum, ein Harz, oder ein Kunststoff ist.

14. Verwendung des Pigments nach irgendeinem der Ansprüche 1 bis 5 als Farbmittel in Anstrichmitteln, Lacken, Tinten, Kosmetika, Harzen, und Kunststoffen.

15. Verwendung des Pigments nach Anspruch 14 in Anstrichmitteln auf Wasserbasis.

## Revendications

1. Un pigment à base de bismuth comprenant un premier revêtement contenant du dioxyde de silicium et un ou plusieurs silanes fonctionnalisés, et un deuxième revêtement contenant un ou plusieurs silanes fonctionnalisés.

2. Le pigment selon la revendication 1, comprenant en poids, sur la base du pigment avant qu'il soit revêtu, de 5 % à 25 % de dioxyde de silicium, de préférence, de 5 % à 10 % de dioxyde de silicium; et de 0,5 % à 10 % d'un ou plusieurs silanes, de préférence, de 0,5 % à 5 % d'un ou plusieurs silanes.

3. Le pigment selon la revendication 1 ou 2, dans lequel le ou les silanes est/sont de formule générale
R-Si-(OR')₃
dans laquelle
R est un groupe alkyle, de préférence un groupe alkyle ayant de 1 à 22 atomes de carbone, un groupe aryle, ou une de leurs combinaisons; ou
R est un groupe alkyle, de préférence un groupe alkyle ayant de 1 à 16 atomes de carbone, ledit groupe alkyle étant substitué par au moins un groupe donneur d'électron, de préférence un groupe alcool ou un groupe amino; et
R' est un groupe alkyle, de préférence un groupe alkyle ayant de 1 à 3 atomes de carbone, ou un groupe aryle.

4. Le pigment selon la revendication 3, dans lequel ledit silane comprend l'amino-3-propyltriéthoxysilane, le N-(2-aminoéthyl)-3-aminopropyl)-triméthoxysilane, le phényltriéthoxysilane, l'hexadécyltriméthoxysilane, le propyltriméthoxysilane, le méthyltriéthoxysilane, le N-benzyl-N-aminoéthyl-3-aminopropyltriméthoxysilane, le N-vinylbenzyl-N'-aminoéthyl-3-aminopropylpolysiloxane, le N-(n-butyl)-3-aminopropyltriméthoxysilane, ou n'importe quelle combinaison de deux ou plus de ceux-ci.

5. Le pigment selon l'une quelconque des revendications précédentes, lequel pigment est de formule générale
BiOIₐBr_{b}
dans laquelle
a est un nombre de 0 à 1, de préférence de 0,35 à 0,90, mieux encore de 0,50 à 0,70; et
b est un nombre de 0 à 1, de préférence de 0,10 à 0,65, mieux encore de 0,30 à 0,50.

6. Un procédé pour fabriquer un pigment à base de bismuth revêtu selon la revendication 1, ledit procédé comprenant les étapes:
- disposer d'une dispersion aqueuse d'un pigment à base de bismuth;
- ajouter une quantité de dioxyde de silicium et une première quantité de silane(s) fonctionnalisé(s) à ladite dispersion aqueuse dudit pigment à base de bismuth;
- agiter ladite dispersion à une température située dans la plage comprise entre 75°C et 95°C, de préférence entre 90°C et 95°C, à un pH situé dans la plage comprise entre 1 et 3,5, de préférence à un pH de 2,5, pendant un temps compris entre 2 heures et 4 heures, de préférence pendant un temps compris entre 1 heure et 4 heures;
- ajouter une deuxième quantité de silane(s) fonctionnalisé(s) à ladite dispersion aqueuse dudit pigment à base de bismuth;
- agiter ladite dispersion, tout en maintenant la température dans la plage allant de 75°C à 95°C, de préférence de 90°C à 95°C, en maintenant le pH dans la plage allant de 1 à 3,5, de préférence à un pH de 2,5, pendant un temps compris entre 5 minutes et 40 minutes, de préférence pendant 15 minutes;
- filtrer, laver, et sécher le pigment revêtu.

7. Le procédé selon la revendication 6, ledit procédé comprenant entre l'étape d'agitation de la dispersion et l'étape de filtration, lavage, et séchage du pigment revêtu, une étape consistant à neutraliser ladite dispersion à un pH situé dans la plage allant de 5 à 8, de préférence à un pH de 7.

8. Le procédé selon la revendication 6 ou 7, dans lequel en poids, sur la base du pigment avant qu'il soit revêtu, la quantité du dioxyde de silicium ajouté à ladite dispersion aqueuse dudit pigment est située dans la plage allant de 5 % à 25 %, mieux encore, de 5 % à 10 %, et dans lequel la première quantité et la deuxième quantité du ou des silanes ajoutés à ladite dispersion aqueuse dudit pigment sont situées dans la plage allant de 0,5 % à 10 %, mieux encore, de 0,5 % à 5 %.

9. Le procédé selon l'une quelconque des revendications 6 à 8, dans lequel ledit ou lesdits silanes ajoutés est/sont de formule générale
R-Si-(OR')₃
dans laquelle
R est un groupe alkyle, de préférence un groupe alkyle ayant de 1 à 22 atomes de carbone, un groupe aryle, ou une de leurs combinaisons; ou
R est un groupe alkyle, de préférence un groupe alkyle ayant de 1 à 16 atomes de carbone, ledit groupe alkyle étant substitué par au moins un groupe donneur d'électron, de préférence un groupe alcool ou un groupe amino; et
R' est un groupe alkyle, de préférence un groupe alkyle ayant de 1 à 3 atomes de carbone, ou un groupe aryle.

10. Le procédé selon la revendication 9, dans lequel ledit silane comprend l'amino-3-propyltriéthoxysilane, le N-(2-aminoéthyl)-3-aminopropyl)-triméthoxysilane, le phényltriéthoxysilane, l'hexadécyltriméthoxysilane, le propyltriméthoxysilane, le méthyltriéthoxysilane, le N-benzyl-N-aminoéthyl-3-aminopropyltriméthoxysilane, le N-vinylbenzyl-N'-aminoéthyl-3-aminopropylpolysiloxane, le N-(n-butyl)-3-aminopropyltriméthoxysilane, ou n'importe quelle combinaison de deux ou plus de ceux-ci.

11. Le procédé selon l'une quelconque des revendications 6 à 10, dans lequel ledit pigment est de formule générale
BiOIₐBr_{b}
dans laquelle
a est un nombre de 0 à 1, de préférence de 0,35 à 0,90, mieux encore de 0,50 à 0,70; et
b est un nombre de 0 à 1, de préférence de 0,10 à 0,65, mieux encore de 0,30 à 0,50.

12. Une composition de substance comprenant le pigment selon l'une quelconque des revendications 1 à 5, un matériau organique de masse moléculaire élevée, et au moins un pigment inorganique ou organique, la quantité totale du pigment étant comprise entre 0,01 % et 80 % en poids, de préférence entre 0,1 % et 30 % en poids, par rapport au poids du matériau organique de masse moléculaire élevée.

13. La composition de substance selon la revendication 12, laquelle composition est une peinture, une laque, une encre, un cosmétique, une résine, ou une matière plastique.

14. Utilisation du pigment selon l'une quelconque des revendications 1 à 5 en tant que colorant dans des peintures, des laques, des encres, des cosmétiques, des résines, ou des matières plastiques.

15. Utilisation du pigment selon la revendication 14 dans des peintures à base d'eau.
